# EUROPEAN PATENT APPLICATION

(11) **EP 3 862 094 A1**
(43) Date of publication of application: **11.08.2021**
(21) Application number: 20156429.1
(22) Date of filing: 10.02.2020
(51) Int. Cl.: B01L 9/06, B04B 5/04, G01N 35/04, G01N 35/02

(54) **ADAPTER FOR A SAMPLE CONTAINER RACK AND SAMPLE CONTAINER RACK DEVICE**

(71) Applicant: Roche Diagnostics GmbH, 68305 Mannheim (DE); F. Hoffmann-La Roche AG, 4070 Basel (CH)
(72) Inventor: The designation of the inventor has not yet been filed
(74) Representative: Patentanwälte Ruff, Wilhelm, Beier, Dauster & Partner mbB

(57) **Abstract**

Adapter (60) for a sample container rack (2), wherein the sample container rack (2) has a number of receptions for receiving sample containers, wherein the sample container rack (2) itself is not usable in a centrifuge without structural damage, wherein the adapter (60) comprises: a top plate (61) having a number of openings (62), wherein the openings (62) geometrically correspond to the receptions of the sample container rack (2) when the adapter (60) is fixed to the sample container rack (2), such that sample containers are insertable through the openings (62) of the top plate (61) into the receptions of the sample container rack (2), wherein the adapter (60) is mechanically dimensioned and fixable to the sample container rack (2) such that the sample container rack (2) is usable in the centrifuge without structural damage.

## Description

The invention relates to an adapter for a sample container rack and to a sample container rack device.

WO 2010/054799 A1 discloses a sample container rack for use in a laboratory sample distribution system. The sample container rack disclosed in WO 2010/054799 A1 is not usable in a centrifuge without structural damage due to its used material and structure.

It is the object underlying the present invention to provide for an adapter for a sample container rack as e.g. disclosed in WO 2010/054799 A1 and to provide for a sample container rack device broadening the usability of the sample container rack as e.g. disclosed in WO 2010/054799 A1.

The adapter is adapted to be used in conjunction with a sample container rack as e.g. disclosed in WO 2010/054799 A1 having a number of receptions for receiving laboratory sample containers. The sample container rack itself intentionally containing laboratory sample containers is not usable in a conventional laboratory centrifuge applying typical accelerations caused to the centrifuged devices without suffering permanent structural damage.

The adapter comprises a top plate having a number of, in particular circular, openings, wherein the openings geometrically correspond to the receptions of the sample container rack when the adapter is intentionally fixed to the sample container rack, such that sample containers are insertable through the openings of the adapter into the receptions of the sample container rack.

The adapter is mechanically dimensioned and fixable to the sample container rack such that the sample container rack completely charged with sample containers is usable in centrifuges as typically used in laboratory systems without structural damage. Reference is made insofar to the typical accelerations caused to the centrifuged devices by conventional laboratory centrifuges.

According to an embodiment, the adapter has an n shaped cross section.

According to an embodiment, the adapter comprises, in particular exactly, two side walls being perpendicular to the top plate, such that the adapter can be clipped on the sample container rack.

According to an embodiment, the adapter comprises snap-lock-elements for providing a snap-lock-connection to the sample container rack.

Additionally or alternatively, the adapter may also be fixed to the sample container rack by means of an adhesive joint.

According to an embodiment, the number of openings lies between 5 and 60, in particular is exactly 5 or 50.

According to an embodiment, the adapter is made of autoclavable plastic material.

According to an embodiment, the adapter comprises reinforcement fibers, in particular nylon reinforcement fibers.

The sample container rack device is intended to be used in a laboratory sample distribution system.

The sample container rack device comprises a sample container rack, wherein the sample container rack has a number of receptions for receiving sample containers, wherein the sample container rack itself is not usable in a centrifuge without structural damage.

The sample container rack device further comprises an adapter as described above fixed to the sample container rack.

According to an embodiment, the sample container rack device comprises a rack carriage, wherein the rack carriage and the sample container rack are tightly connectable with each other, e.g. by means of a latching device that can be released without tools.

According to an embodiment, inserts having elastic spring arms are inserted in the receptions for holding the sample containers.

According to an embodiment, the sample container rack is made of synthetic material, in particular is made of polycarbonate.

According to an embodiment, the sample container rack is composed of an upper part and a lower part, the lower part being tightly connected to the upper part, in particular welded or adhesively bonded thereto.

According to an embodiment, the receptions are formed in the lower part and in the upper part and are arranged to be aligned with one another, wherein the receptions of the lower part are configured in a conically tapered shape.

According to an embodiment, the rack carriage is made at least partially of magnetic and/or magnetizable material.

According to an embodiment, the rack carriage has coupling elements on its underside, in particular positioning pins, for coupling to a laboratory sample distribution system.

The invention will now be described in detail with respect to the drawings, wherein
- FIG. 1:: shows a schematic side view of a sample container rack according to the invention during installation on a rack carriage;
- FIG. 2:: shows the sample container rack and the rack carriage according to FIG. 1 in a perspective view;
- FIG. 3:: shows the sample container rack and the rack carriage according to FIG. 1 in a cross-section side view;
- FIG. 4:: shows the sample container rack and the rack carriage according to FIG. 3 in a cross section front view;
- FIG. 5:: shows a sample container rack according to the invention similar to FIG. 1 in an exploded view;
- FIG. 6:: shows another design of a sample container rack according to the invention;
- FIG. 7:: shows a rack carriage for a sample container rack according to the invention in a perspective view,
- FIG. 8:: shows a top view of the rack carriage according to FIG. 7 with leaf springs mounted on it,
- FIG. 9:: shows a perspective view of an adapter according to the invention fixed to the sample container rack according to FIG. 1,
- FIG. 10:: shows the adapter according to FIG. 9 from different perspectives, and
- FIG. 11:: shows an adapter according to a further embodiment from different perspectives.

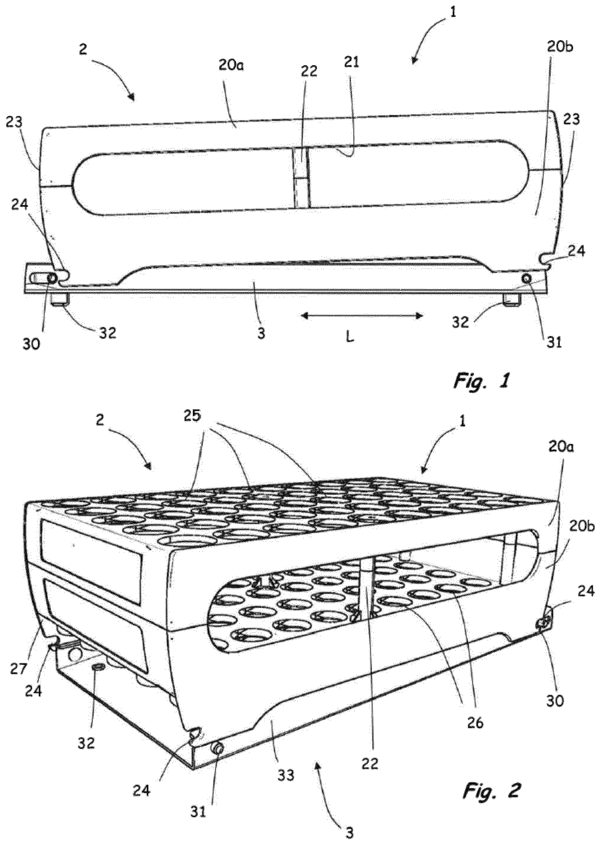

FIG. 1 schematically shows a sample container rack 2 and a rack carriage 3 according to the invention forming a sample container rack device 1, wherein the sample container rack 2 and the rack carriage 3 can be connected tightly to each other by a latching device that can be released without tools.

In the exemplary embodiment shown, the sample container rack 2 is made of two plastic parts, with an upper part 20a and a lower part 20b, which are tightly connected to each other, e.g., glued and/or welded. The upper part 20a and the lower part 20b are connected to each other in such a way that a gripping recess 21 remains for simple handling of the sample container rack 2. To increase the stability of the sample container rack 2, ribs 22 are provided between the upper part 20a and the lower part 20b.

For connection with the rack carriage 3, latching grooves 24 are provided on face sides 23 of the sample container rack 2, which latching grooves 24 are each open in the direction of face surfaces 23 in the exemplary embodiment shown. For connection with the rack carriage 3, the latching grooves 24 are placed on latching bolts 30, 31 of the rack carriage 3. In the exemplary embodiment shown, the latching bolts 30, 31 extend from one outer side of the rack carriage 3. The associated sample container rack 2 can be placed on the rack carriage 3 in such a way that inner sides of the lower part 20b lie opposite the outer sides of the rack carriage 3.

The latching grooves 24 and/or the latching bolts 30, 31 are spaced in pairs in longitudinal direction L of the sample container rack 2/rack carriage 3. In this case, longitudinal direction L indicates a direction in which that sample container rack 2/rack carriage 3 can be installed in a typical laboratory sample distribution system that is not shown. Because of the arrangement of the latching bolts 30, 31, on these side surfaces an especially simple handling is implemented. However, designs are also contemplated in which latching bolts 30, 31 and the associated latching grooves 24 are provided on face surfaces of the sample container rack 2/rack carriage 3.

In order to permit a placement of the latching grooves 24 on the latching bolts 30, 31, the latching bolt 30 is mounted so it is movable. In other designs, the latching bolts 30 themselves are elastically deformable so the force element is designed to form one part with the latching bolt.

For connection of the sample container rack 2 with the rack carriage 3, first, as shown schematically in FIG. 1, the sample container rack 2 is guided with its latching groove 24 on the movable latching bolt 30. The movable latching bolt 30 can be slid in longitudinal direction L with the sample container rack 2 placed on it until an installation of the latching groove 24 onto the rigidly mounted latching bolt 31 is possible. In order to secure the latched connection, the latching bolt 30 is held in the latched position shown in FIG. 1 by means of a force element, especially by means of a spring. Producing or releasing the latched connection is thus only possible by overcoming the constraining force applied by the spring.

The rack carriage 3 has coupling elements 32, which are designed as positioning pins in the exemplary embodiment shown. With these coupling elements 32, the rack carriage 3 can be connected with corresponding elements of the laboratory sample distribution system that is not shown. The rack carriage 3 is preferably made of a material that is magnetic and/or can be magnetized so that a coupling of the rack carriage 3 with the laboratory sample distribution system is also possible using magnetic force.

FIG. 2 schematically shows the sample container rack 2 and the rack carriage 3 according to FIG. 1 in a perspective view from the other side. As can be seen from FIG. 2, the upper part 20a and the lower part 20b each have receptions 25, 26, in which laboratory sample containers (not shown in FIG. 2), especially test tubes, can be inserted. As can also be seen from FIG. 2, the rack carriage 3 is essentially designed as a U-shaped part with a rectangular base surface. The sample container rack 2 can be placed on the rack carriage 3 in such a way that the inner surfaces 27 of the lower part 20b can come to rest on the outer sides 33 of the flanks of the rack carriage 3.

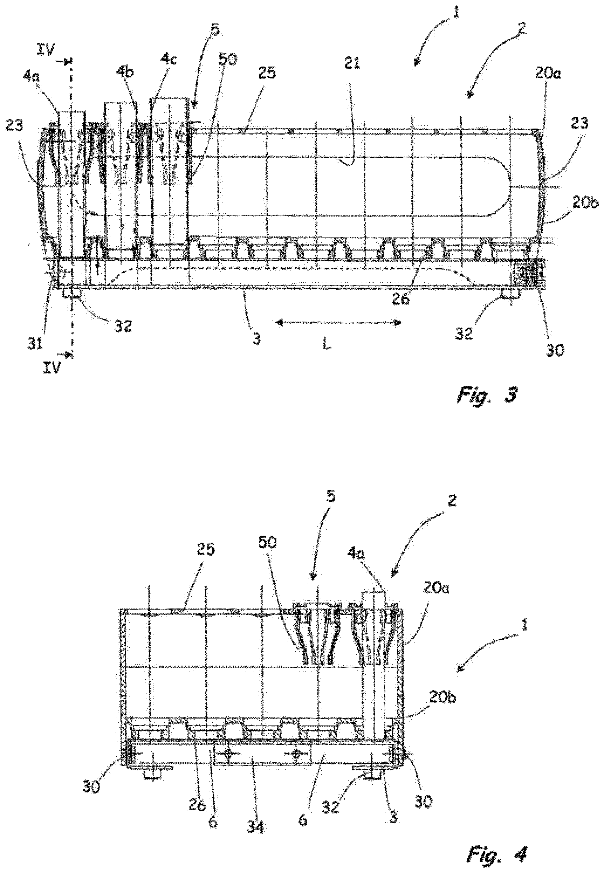

FIG. 3 schematically shows a cross section side view of the sample container rack 2 and of the rack carriage 3 according to FIG. 1, with three sample container 4a, 4b and 4c received. In the exemplary embodiment shown, inserts 5 with spring arms 50 are inserted in the receptions 25 of the upper part 20a, by which the sample containers 4a, 4b, 4c are securely held in the receptions 25. As can also be seen from FIG. 3, the receptions 26 in the lower part 20b are conical in design, whereby the diameter of the receptions 26 is designed so that it narrows in steps toward the bottom. Because of this, a mechanical fixing of sample holders 4a, 4b, 4c with different diameters, as shown schematically in FIG. 3, is improved.

FIG. 4 schematically shows a cross section view of the sample container rack 2 and of the rack carriage 3 along line IV-IV according to FIG. 3. As can be recognized in FIG. 4, the rack carriage 3 has a fastening device 34. On the fastening device 34, force elements designed as leaf springs 6 are fastened, by which the movable latching bolt 30 can be constrained in the latching position.

In the embodiment of a sample container rack 2 and a rack carriage 3, according to FIGS. 1 to 4, fifty receptions 25 and/or 26 are provided, which are arranged ordered in rows and columns, wherein five columns are provided in which ten receptions 25, 26 each are formed. However, designs with a number of columns and/or number of rows deviating from this are also contemplated. Usually embodiments are preferred that have five columns, wherein four, five, ten, fifteen or even thirty rows can be provided. However, optional other designs are of course also contemplated.

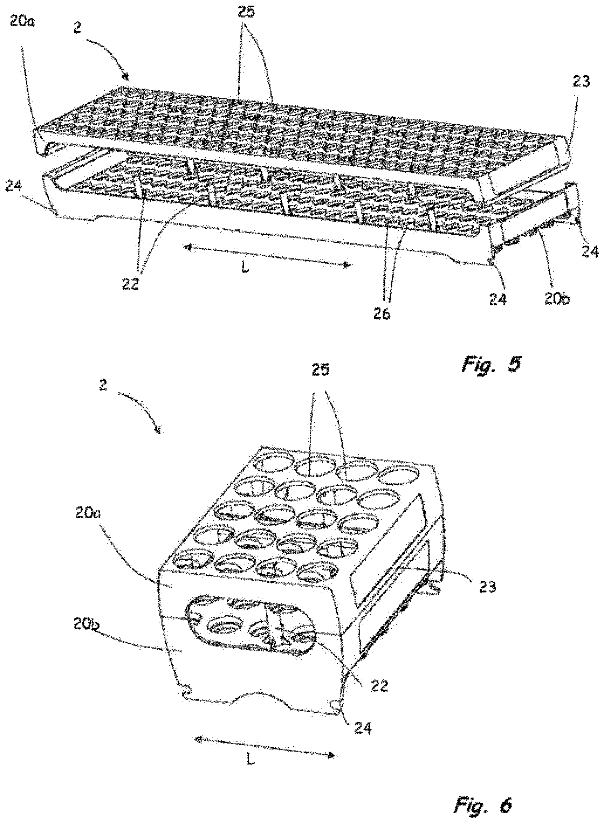

FIG. 5 schematically shows a sample container rack 2 according to a second exemplary embodiment of the invention, wherein receptions 25, 26 are provided in thirty rows with five receptions 25, 26 in each. The sample container rack 2 according to FIG. 5 corresponds essentially to the sample container rack 2 according to FIGS. 1 to 4. For similar components, uniform reference numbers are used and a detailed description of these components will be dispensed with. Because of the increased length in longitudinal direction L, the number of connecting ribs 22 between the upper part 20a and the lower part 20b is increased to improve the stability.

FIG. 6 schematically shows, in perspective view, another embodiment of a sample container rack 2, wherein only four rows of receivers 25, 26 are provided.

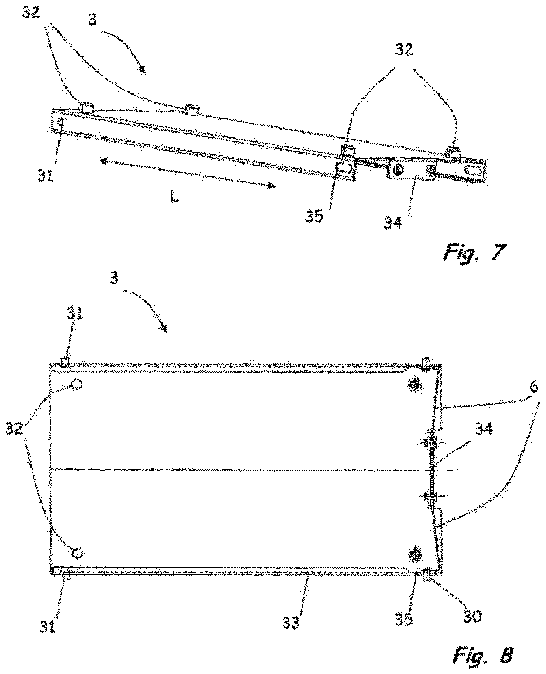

FIGS. 7 and 8 schematically show a rack carriage 3 for a sample container rack 2 according to the invention, wherein in FIG. 7 the leaf springs 6 are not shown for the sake of clarity. As already described, the rack carriage 3 has a fastening device 34, on which leaf springs 6 are mounted in such a way that latching bolts 30 connected with the leaf springs 6 are guided into a slot 35 provided in one of the side flanks 33 of the rack carriage 3.

Because of the latching device according to the invention, it is possible to connect a sample container rack 2 with the associated rack carriage 3 in a simple manner and without tools. In this case, several rack carriages 3 in conjunction with corresponding attached sample container racks 2 can be arranged close to each other, next to each other and in rows, in a small installation space, e.g., in a drawer or an inlet area of a laboratory sample distribution system without impeding the handling of the sample container racks 2 attached to the corresponding rack carriages 3 in producing or releasing the latched connection.

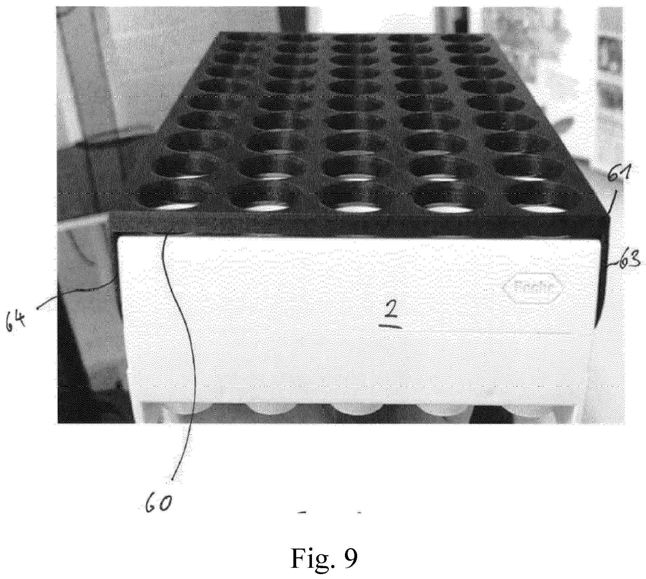

FIG. 9 shows a perspective view of an adapter 60 made of autoclavable plastic material fixed to a sample container rack 2 as e.g. shown in figures 1 to 8. The adapter 60 may comprise reinforcement fibers, in particular nylon reinforcement fibers, to improve its mechanical stability.

The sample container rack 2 itself, i.e. without further reinforcement, is not usable in a conventional laboratory centrifuge without structural damage to the sample container rack 2. The adapter 60 is mechanically dimensioned and fixed to the sample container rack 2 such that the sample container rack 2 fully charged with sample containers 4a, 4b, 4c is usable in the centrifuge without structural damage to the sample container rack 2 reinforced by means of the adapter 60. Thus, the sample container rack 2 reinforced by means of the adapter 60 is usable before centrifuging sample containers 4a, 4b, 4c received by the sample container rack 2, while centrifuging sample containers 4a, 4b, 4c received by the sample container rack 2 and after centrifuging sample containers 4a, 4b, 4c received by the sample container rack 2.

The inventive adapters 60 as retrofitting parts are e.g. intended to complement sample container racks 2 already being used in laboratory systems. After being complemented by the retrofitting adapters 60, the sample container racks 2 may also be used during a centrifuging step thus expanding the usability of the already existing sample container racks 2 significantly.

The adapter 60 comprises a top plate 61 having a number of openings 62, e.g. 50 openings, wherein the openings 62 geometrically correspond to the receptions 25, 26 of the sample container rack 2 when the adapter 60 is fixed to the sample container rack 2, such that sample containers 4a, 4b, 4c are insertable through the openings 62 of the top plate 61 into the receptions 25, 26 of the sample container rack 2.

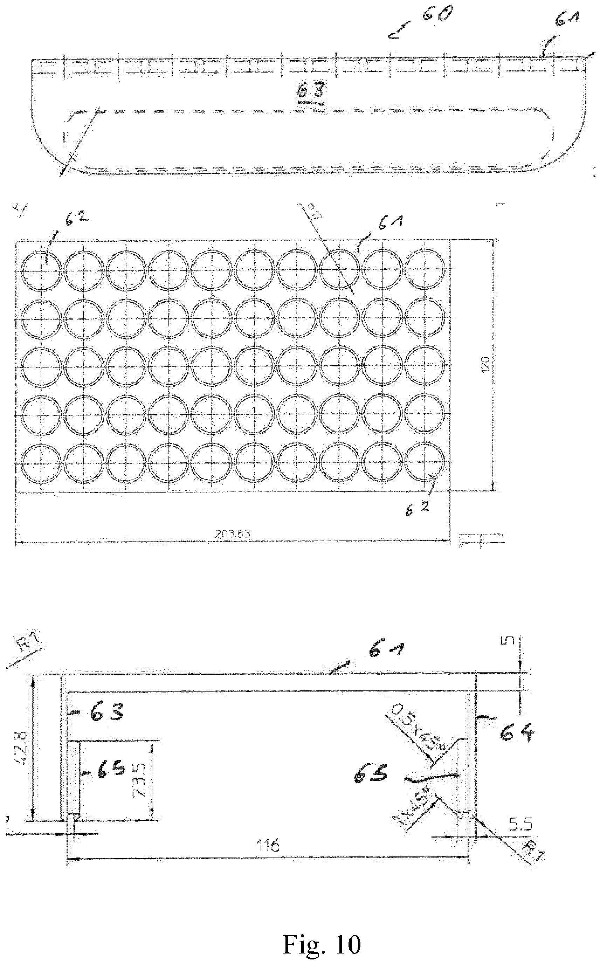

The adapter 60 has a n shaped cross section (see also FIG. 10). The adapter 60 comprises two side walls 63, 64 extending perpendicular to the top plate 61, such that the adapter 60 can be clipped or snapped on the sample container rack 2 as depicted in FIG. 9.

FIG. 10 shows the adapter 60 according to FIG. 9 from different perspectives. In the upper part of FIG. 10 the adapter 60 is shown in a side view, in the middle part of FIG. 10 the adapter 60 is shown in a top view and in the lower part of FIG. 10 the adapter 60 is shown in a front or cross sectional view.

As shown in the cross sectional view, the adapter 60 comprises snap-lock-elements 65 having a height of approximately 23,5 mm embodied in respective bottom parts of the side walls 63 and 64 for providing a snap-lock-connection to the sample container rack 2. The snap-lock-elements 65 have a bezel of 45 ° at their upper and lower ends, respectively. The snap-lock-elements 65 engage with the gripping recesses 21 of the sample container rack 2, such that the adapter 60 can be simply snapped on the sample container rack 2.

The circular openings 62 have a diameter of approximately 17 mm. The top plate 61 has a length of approximately 203,83 mm, a width of approximately 120 mm and a thickness of approximately 5 mm. The side walls 63 and 64 have a maximum height of approximately 42,8 mm and a wall thickness of approximately 2 mm. The side walls 63 and 64 are spaced approximately 116 mm from one another. The side walls 63 and 64 are rounded at their respective ends.

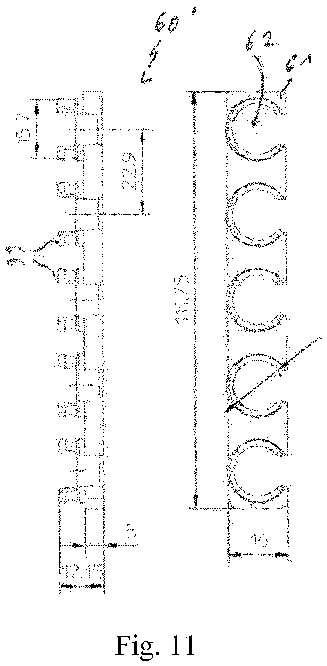

FIG. 11 shows an adapter 60' according to a further embodiment from different perspectives. On the left side of FIG. 11 the adapter 60' is shown in a side view and on the right side of FIG. 11 the adapter 60' is shown in a top view.

The adapter 60' has five partially circular openings 62 in a linear arrangement. The diameter of the openings 62 is approximately 13,5 mm. The adapter 60' is designed for sample container racks having five partially circular receivers in a corresponding linear arrangement.

The adapter 60' has collar shaped protrusions 66 partially forming a border of the openings 62 and having a spring characteristic. The protrusions are inserted or snapped into corresponding receivers of the sample container rack to constitute a positive locking between the adapter 60' and the sample container rack.

The length of the adapter 60' is approximately 111,75 mm, the width of the adapter 60' is approximately 16 mm and the total height of the adapter 60' is approximately 12,15 mm.

## Claims

1. Adapter (60, 60') for a sample container rack (2), wherein the sample container rack (2) has a number of receptions (25, 26) for receiving sample containers (4a, 4b, 4c), wherein the sample container rack (2) itself is not usable in a centrifuge without structural damage, wherein the adapter (60, 60') comprises:
- a top plate (61) having a number of openings (62), wherein the openings (62) geometrically correspond to the receptions (25, 26) of the sample container rack (2) when the adapter (60, 60') is fixed to the sample container rack (2), such that sample containers (4a, 4b, 4c) are insertable through the openings (62) of the top plate (61) into the receptions (25, 26) of the sample container rack (2),
- wherein the adapter (60, 60') is mechanically dimensioned and fixable to the sample container rack (2) such that the sample container rack (2) is usable in the centrifuge without structural damage.

2. Adapter (60, 60') according to claim 1, **characterized in that**
- the adapter (60, 60') has a n shaped cross section.

3. Adapter (60, 60') according to claim 1 or 2, **characterized in that**
- the adapter (60, 60') comprises two side walls (63, 64) being perpendicular to the top plate (61), such that the adapter (60, 60') can be clipped on the sample container rack (2).

4. Adapter (60, 60') according to one of the preceding claims, **characterized in that**
- the adapter (60, 60') comprises snap-lock-elements (65) for providing a snap-lock-connection to the sample container rack (2).

5. Adapter (60, 60') according to one of the preceding claims, **characterized in that**
- the number of openings (62) lies between 5 and 60.

6. Adapter (60, 60') according to one of the preceding claims, **characterized in that**
- the adapter (60, 60') is made of autoclavable plastic material.

7. Adapter (60, 60') according to one of the preceding claims, **characterized in that**
- the adapter comprises reinforcement fibers, in particular nylon reinforcement fibers.

8. Sample container rack device for a laboratory sample distribution system, comprising:
- a sample container rack (2), wherein the sample container rack (2) has a number of receptions (25, 26) for receiving sample containers (4a, 4b, 4c), wherein the sample container rack (2) itself is not usable in a centrifuge without structural damage, and
- an adapter (60, 60') according to one of the preceding claims mechanically fixed to the sample container rack (2).

9. Sample container rack device according to claim 8, comprising
- a rack carriage (3), wherein
- the rack carriage (3) and the sample container rack (2) are tightly connectable with each other.

10. Sample container rack device according to claim 8 or 9, **characterized in that** inserts (5) having elastic spring arms (50) are inserted in the receptions (25, 26) for holding the sample containers (4a, 4b, 4c).

11. Sample container rack device according to one of claims 8 to 10, **characterized in that** the sample container rack (2) is made of synthetic material, in particular is made of polycarbonate.

12. Sample container rack device according to one of claims 8 to 11, **characterized in that** the sample container rack (2) is composed of an upper part (20a) and a lower part (20b), the lower part (20b) being tightly connected to the upper part (20a), in particular welded or adhesively bonded thereto.

13. Sample container rack device according to claim 12, **characterized in that** the receptions (25, 26) are formed in the lower part (20b) and in the upper part (20a) and are arranged to be aligned with one another, wherein the receptions (25, 26) of the lower part (20b) are configured in a conically tapered shape.

14. Sample container rack device according to one of claims 8 to 13, **characterized in that** the rack carriage (3) is made at least partially of magnetic and/or magnetizable material.

15. Sample container rack device according to one of claims 8 to 14, **characterized in that** the rack carriage (3) has coupling elements on its underside, in particular positioning pins (32), for coupling to a laboratory sample distribution system.
